# EUROPEAN PATENT SPECIFICATION

(11) **EP 2 005 603 B1**
(45) Date of publication and mention of the grant of the patent: **13.06.2012**
(21) Application number: 07715457.3
(22) Date of filing: 02.03.2007
(51) Int. Cl.: H04M 1/02

(54) **SLIDE TYPE PERSONAL PORTABLE DEVICE**
PERSÖNLICHES TRAGBARES GERÄT DES SCHIEBETYPS
DISPOSITIF PORTABLE PERSONNEL DE TYPE COULISSANT

(30) Priority: 07.04.2006 KR 20060032096; 19.07.2006 KR 20060067234
(43) Date of publication of application: 24.12.2008
(73) Proprietor: Shell-Line Co., Ltd., Daegu 704-801 (KR)
(72) Inventor: LEE, Sang Ho, Daegu 704-130 (KR); LEE, Bo Hyung, Daegu 704-130 (KR); SEO, Seong Ki, Gyeonggi-do 420-729 (KR)
(74) Representative: Rupprecht, Kay
(86) International application number: PCT/KR2007/001053
(87) International publication number: WO 2007/117080

(56) References cited:
- WO-A-2005/091515
- KR-A- 20040 008 240
- KR-A- 20050 110 931
- KR-A- 20060 001 898
- KR-A- 20060 031 430

## Description

### Technical Field

The present invention relates to a personal portable device. More particularly, the present invention relates to a slide type personal portable device including a slide module which can contribute to miniaturization and thinning.

### Background Art

Personal portable devices may be generally divided into a flip type, a folder type, and a slide type depending on an external shape or an operation method.

In a slide type personal portable device, two sliding bodies are disposed being overlapped with each other and a display unit and a key input unit are disposed in the same direction on the sliding bodies, respectively. Generally, the slide type personal portable device may expose a display unit or a key input unit hidden on the rear by relatively moving a front sliding body. As an example, there is a slide type personal portable device whose key input unit formed on a rear sliding body is exposed by pushing up a front sliding body. As another example, there is a slide type personal portable device whose display unit formed on a rear sliding body is exposed by downwardly moving a front sliding body on which a key input unit is formed.

A slide type personal portable device includes sliding bodies overlapped above and below. A slide hinge device connecting both bodies is interposed between the sliding bodies to mutually connect the sliding bodies and enable the sliding bodies to mutually slide. In association with a slide hinge device, hinge devices of various structures are disclosed. Among the disclosed hinge devices, there is a hinge device using a guide bar or shaft, whose bodies may precisely slide by using the guide bar.

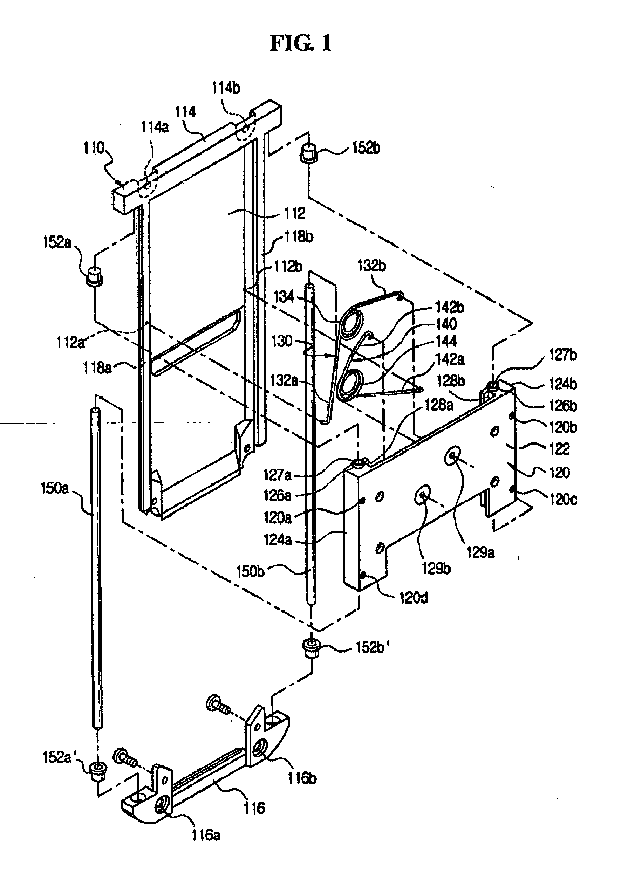

FIG. 1 is an exploded perspective view illustrating a structure of a conventional slide module. Referring to FIG. 1, the conventional slide module 100 includes a guide rail element 110, a slide element 120 sliding on the guide rail element 110, and first and second torsion springs 130 and 140 promoting the sliding of the slide element 120.

The guide rail element 110 is formed of a rectangular board 112. First and second guide bars 150a and 150b are installed along both sides of the rectangular board 112 parallel to each other. The first and second guide bars 150a and 150b are separated from the both sides of the rectangular board 112 at a certain interval. Both ends of the first and second guide bars 150a and 150b are fastened to top and bottom supporters 114 and 116 of the rectangular board 112.

Also, top and bottom shock absorbing rubbers 152a to 152b' are slipped on both top and bottom ends of the first and second guide bars 150a and 150b, and both the top and bottom ends enter into the top and bottom supporters 114 and 116 and are fastened thereto. The top and bottom shock absorbing rubbers 152a to 152b' are in the shape of a hat in order to cover the ends of the first and second guide bars 150a and 150b, prevent a direct collision between the guide rail element 110 and the slide element 120, and enable the first and second guide bars 150a and 150b installed along the guide rail element 110 to be parallel to each other in sliding of the slide element 120.

Two holes are formed adjacent to both outer edges of the rectangular board 112. An arm 132a of the first torsion spring 130 and an arm 142a of the second torsion spring 140 are inserted into the holes to rotate.

First and second guide sills 118a and 118b are formed on both sides of the rectangular board 112, opposite to the first and second guide bars 150a and 150b. In detail, the first guide sill 118a opposite to the first guide bar 150a and the second guide sill 118b opposite to the second guide bar 150b are formed as straight protrusions extended and protruded from the both sides of the rectangular board 112.

The slide element 120 may straightly slide on the guide rail element 110. For this, the slide element 120 includes first and second slide engagement portions 124a and 124b formed on both edges of a rectangular substrate 122. Slidably-inserted first and second guide holes 126a and 126b which the first and second guide bars 150a and 150b penetrate, respectively, are formed on the first and second slide engagement portions 124a and 124b. Two pairs of bearings 127a to 127b' are respectively upwardly and downwardly inserted into the first and second guide holes 126a and 126b to mitigate contact friction in sliding of the first and second guide bars 150a and 150b. The guide rail elements 110 do not directly make contact with the slide element 120, an impact may be relieved, and noise may be reduced by using the bearings 127a to 127b' and the shock absorbing rubbers 152a to 152b'.

First and second rails 128a and 128b protruded toward each other are formed inside the first and second slide engagement portions 124a and 124b. The first and second rails 128a and 128b are engaged with the first and second guide sills 118a and 118b of the guide rail element 110 to slide, respectively. In this case, since there is a gap between the first and second rails 128a and 128b and the first and second guide sills 118a and 118b, the rails 128a and 128b do not directly make contact with the guide sills 118a and 118b in sliding. In sliding; the first and second guide bars 150a and 150b and the first and second guide holes 126a and 126b mainly lead the sliding movement of the sliding bodies, and the first and second guide sills 118a and 118b and the first and second rails 128a and 128b assist to suppress a deviation or diversion from a horizontal movement to another direction so that the slide element 120 stably slides on the guide rail element 110.

After assembling the slide module 100, an upper body and a lower body of a personal portable device are screwed to the guide rail element 110 and the slide element 120, respectively, thereby completing a slide type personal portable device (not shown). Since a slide type personal portable device is generally used by holding a lower body with a hand and pushing up an upper body corresponding to a cover, a guide rail element fastened to the upper body may move on a slide element fastened to the lower body.

Generally, the guide rail element 110 and the slide element 120 are formed of aluminum and are manufactured by die casting. Generally, the first and second guide bars 150a and 150b are formed separately from the guide rail element 110. Accordingly, the lower supporter 116 has a structure separated from the rectangular board 112 and is engaged with the rectangular board 112 by inserting the first and second guide bars 150a and 150b. Since the first and second guide holes 126a and 126b for containing the first and second guide bars 150a and 150b can not be formed by die casting, the first and second guide holes 126a and 126b have to be formed by an additional process of making a hole after manufacturing the slide element 120. Next, the bearings 127a to 127b' formed of polyoxymethylene (POM), and the like are additionally inserted.

However, since the conventional slide module is configured to perform only a function corresponding to different portions of an upper body and a lower body, there is a problem that the personal portable device cannot be reduced to a thickness greater than a predetermined thickness.

Specifically, since the slide element 120 of the slide module is formed being separate from a housing forming a front surface of the lower body, and is configured to be combined in a doubly-overlapped form, there is a problem that the slide type personal portable device becomes thick. Also, since the guide rail element 110 Is similarly formed being separate from the housing forming a back surface of the upper body, and is configured to be combined in the doubly-overlapped form, there is a problem that the slide type personal portable device becomes thick.

Also, since a predetermined area for containing the guide rail element 110 and the slide element 120 should be secured in an inside of the upper body and the lower body, in a structure in which the guide rail element 110 and the slide element 120 are contained In the inside of the upper body and the lower body, there is a problem that area availability of the upper body and the lower body, and a degree of design freedom are reduced, and a thickness and a size of the upper body and the lower body are inevitably increased.
Also, since the guide rail element 110 and the upper body, and the slide element 120 and the lower body are respectively separately manufactured, and are subsequently combined, there is a problem that parts and assembly man-hours are increased. Accordingly, there is a problem that costs are increased, and workability and productivity are reduced.

WO 2005/091515 A1 discloses a sliding mechanism apparatus used for slidebly opening and closing a slider-type cellular phone. A guide member and a slide member are engaged with each other so as to enable to slide relatively to each other.

### Disclosure of Invention

### Technical Goals

The present invention provides a slide type personal portable device which can contribute to miniaturization and thinning.

The present invention also provides a slide type personal portable device which can simplify a structure and an assembly process of a personal portable device, reduce costs, and improve workability and productivity.

The present invention also provides a slide type personal portable device which enables a housing of a slide part to perform an innate function of forming an external appearance, and simultaneously perform a function of a slide module for installing a guide bar.

The present invention also provides a slide type personal portable device which enables a guide frame for performing a function of a slide module to be fixed in a body part as one body to form a front wall of the body part, and to simultaneously perform a function of a housing.

The present invention also provides a slide type personal portable device which can exclude a separate process of fixing a guide frame in a body part.

### Technical solutions

According to an aspect of the present invention, there is provided a slide type personal portable device including: a body part including a guide frame which is provided in front of the body part to form a front wall of the body part, a slide part including a housing in which a setting hole is formed on a back surface of the housing, wherein the setting hole passes through the back surface, and a guide bar is disposed along a sliding direction of the slide part in an inside of the setting hole, a cover plate combined with an inside of the housing to cover the setting hole, and a slide guide including a penetration hole formed according to the guide bar to guide a sliding of the slide part, wherein the slide guide is mounted on the slide part via the guide bar, and is fixed in the guide frame, wherein a guide slot is formed in the guide frame along the sliding direction of slide part, and a joint hook corresponding to the guide slot is formed in the cover plate, and the joint hook passes through the guide frame and is selectively jointed with the guide slot to perform sliding.

The housing of the slide part may perform an innate function of covering a surface of the slide part and forming an external appearance, and simultaneously performs a function of a slide module. The guide frame also performs the function of the slide module so that the slide guide may be combined, and simultaneously performs a function of the housing for covering a surface of the body part.

Also, both a housing structure and a guide frame structure of the slide part formed in a single wall formed as described above may be used, and either one of a housing structure and a guide frame structure of the slide part may be independently used as required.

Since a guide rail element and a slide element are respectively formed being separate from a housing forming an external appearance of the slide part and the body part, and are combined in a doubly-overlapped form according to a conventional art, there is a problem that a device cannot be reduced to a thickness greater than a predetermined thickness and a small device cannot be manufactured. However, the slide type personal portable device according to the present invention can manufacture the device in a smaller and thinner form since the housing and/or the guide frame of the slide part is configured to be fixed, in the slide part and/or the body part, in a single wall form as one body.

Also, when the above-described guide frame structure is separately used, a separate rail plate may be mounted on a back surface of the housing of the slide part, and the guide bar may be mounted via the rail plate. Specifically, the present invention may be applied to a case where the separate rail plate is additionally mounted on the back surface of the housing of the slide part, and the back surface of the slide part is formed in a double wall form.

Also, the guide bar is formed by insert injection molding with the housing as one body, and the guide bar and the housing are separately assembled as required. Also, the guide frame is formed by insert injection molding with the body part as one body, and is configured to be fixed in the body part as one body when forming a single wall by a general fastening method such as welding, adhesion, and the like, as required.

### Brief Description of Drawings

FIG. 1 is an exploded perspective view illustrating a structure of a conventional slide module;
FIG. 2 is a perspective view illustrating a structure of a slide type personal portable device according to an exemplary embodiment of the present invention;
FIG. 3 is a perspective view illustrating a structure of a slide module in a slide type personal portable device according to an exemplary embodiment of the present invention;
FIGS. 4 and 5 are exploded perspective views illustrating a structure of a slide module in a slide type personal portable device according to an exemplary embodiment of the present invention;
FIG. 6 is a cross-sectional view illustrating a section incised along a I-I line of FIG. 3;
FIG 7 is a cross-sectional view illustrating a section incised along a II-II line of FIG. 3;
FIG 8 is a perspective view illustrating a structure of a slide module in a slide type personal portable device according to another exemplary embodiment of the present invention;
FIGS. 9 and 10 are perspective views illustrating a structure of a slide module in a slide type personal portable device according to another exemplary embodiment of the present invention;
FIG. 11 is an exploded perspective view illustrating a structure of a slide module in a slide type personal portable device according to another exemplary embodiment of the present invention;
FIG. 12 is a perspective view illustrating a structure of a cover plate in a slide type personal portable device according to another exemplary embodiment of the present invention;
FIGS. 13 and 14 are a top view and a side view illustrating a structure of a guide frame in a slide type personal portable device according to another exemplary embodiment of the present invention; and
FIG. 15 is a cross-sectional view illustrating a section incised along a III-III line of FIG. 10.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

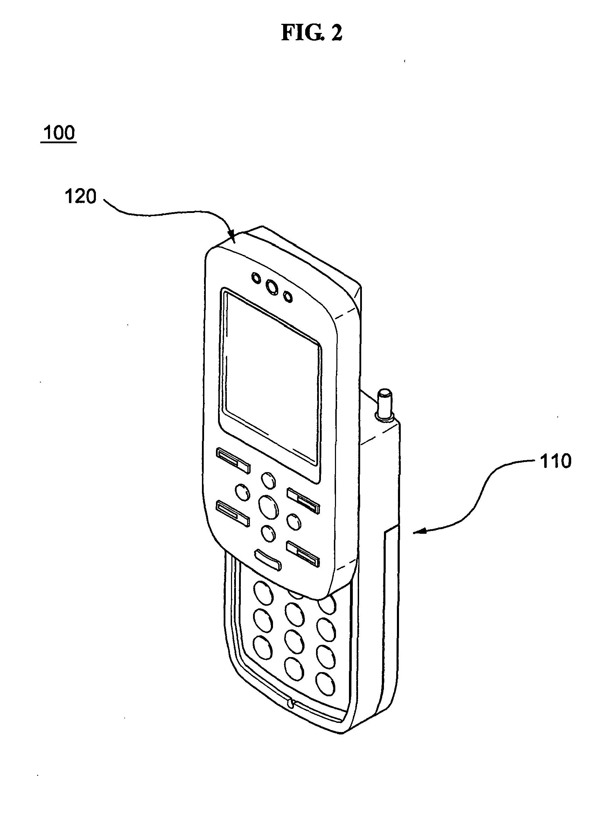

FIG 2 is a perspective view illustrating a structure of a slide type personal portable device according to an exemplary embodiment of the present invention.

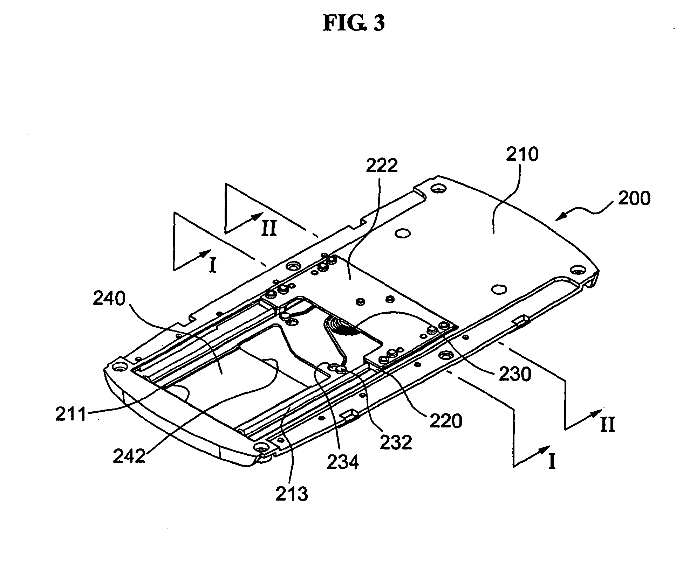

As illustrated in FIGS. 2 and 3, the personal portable device according to the present exemplary embodiment of the present invention includes a device body 100 and a slide module 200. The device body 100 includes a body part 110, and a slide part 120 disposed to be overlappable with the body part 110, and the slide module 200 is interposed between the body part 110 and the slide part 120 so that the slide part 120 may be slidable on the body part 110.

A keypad having a plurality of keys for inputting various information, and a transmitting portion for transmitting a user's voice may be included on a front surface of a lower side of a center in the body part 110, and a printed circuit board (PCB) for various controls may be contained in an inside of the body part 110.

A display portion for outputting image information, and a receiving portion for transmitting voice from a counterpart may be included on a front surface of the slide part 120.

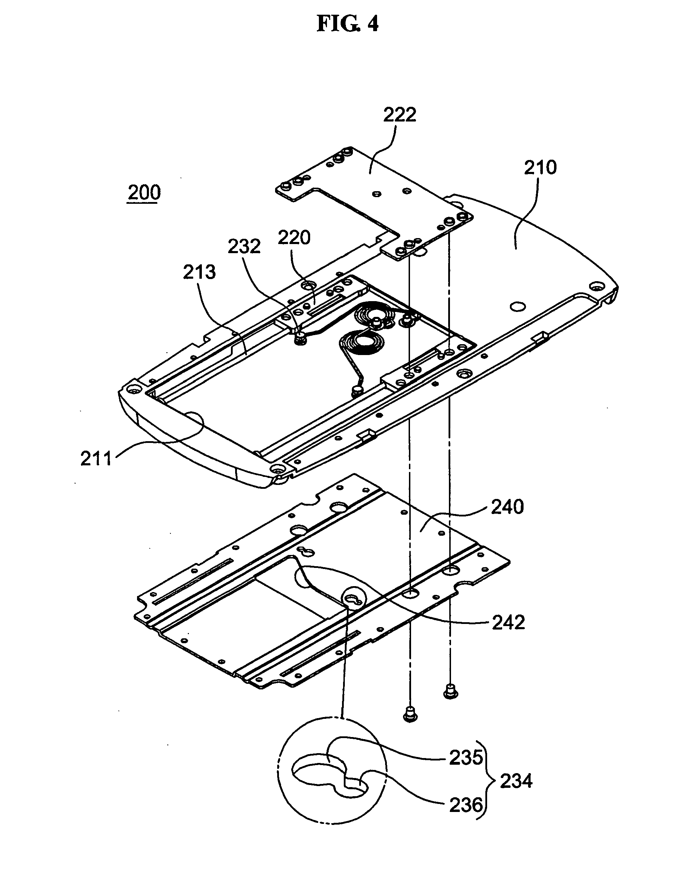

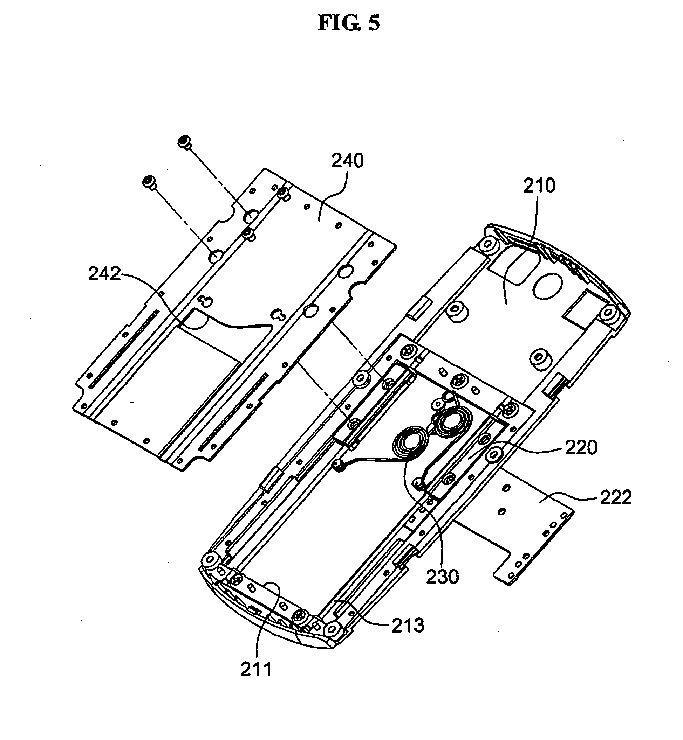

FIG 3 is a perspective view illustrating a structure of a slide module 200 in a slide type personal portable device according to an exemplary embodiment of the present invention, and FIGS. 4 and 5 are exploded perspective views illustrating a structure of a slide module 200 in a slide type personal portable device according to an exemplary embodiment of the present invention.

The slide module 200 is provided to cover a back surface of the slide part 120. Also, the slide module 200 includes a housing 210 in which a setting hole 211 connected with an inside of the slide part 120 is formed, a guide bar 213 disposed along a sliding direction of the slide part 120 in an inside of the setting hole 211, and a slide guide 220 sliding along the guide bar 213, wherein the slide guide 220 is mounted on the body part 110.

The housing 210 is formed in a form of corresponding to a bottom surface of the slide part 120, and is combined with the slide part 120 to cover the bottom surface of the slide part 120 as one body. The setting hole 211 is formed in a lower area of the housing 210 being penetrative along a thickness direction of the housing 210, and one pair of guide bar 213 is disposed along a sliding direction of the housing 210 in an inside of the setting hole 211 being spaced apart along a width direction of the housing 210. The guide bar 213 may be formed by insert injection molding with the housing 210 as one body, and may be separately assembled as required.

The slide guide 220 is combined with each guide bar 213 to slide along the sliding direction of the housing 210, and the slide guide 220 may be mounted on the body part 110 as one body.

Also, each slide guide 220 may be connected with a guide frame 222 formed to have a width corresponding to the setting hole 211 of the housing 210, and may be combined with the body part 110 via a guide frame 222.

The slide guide 220 may slide along the guide bar 213 by the above-described structure. Accordingly, the slide part 120 may slide along the body part 110.

Here, the slide guide 220 may be formed of a general plastic material, however, the slide guide 220 is desirably formed of a lubricant material having great self-lubrication, and superior anti-fatigue property such as polyoxymethylene, polyamide, polyamide imide, and the like, since a material having a great mechanical, thermal, and chemical property even in a wide usage temperature range for many hours, and great dimensional stability is required to be used.

Also, a cover plate 240 may be combined with an inside of the housing 210 to cover the setting hole 211. The cover plate 240 is combined with an inside of the housing 210 to cover the setting hole 211, and enables various parts in an inside of the slide part 120 to be protected from external interference and shock. Also, since the cover plate 240 can prevent a foreign substance, such as dust of the slide part 120, and the like, from being flowed via the setting hole 211, performance reduction and breakdown due to inflow of the foreign substance, and the like, into the inside of the slide part 120 may be prevented.

Also, the slide module 200 may include an elastic member 230 so that sliding of the slide part 120 may be elastically performed along the body part 110, and a general spring, and the like, may be used for the elastic member 230.

One end of the elastic member 230 is connected with the cover plate 240, and another end is connected with the guide frame 222. Accordingly, elasticity is accumulated when the slide guide 220 is moved from an end portion area of the guide bar 213 to a center area of the guide bar 213, and the elastic member 230 is restored after the slide guide 220 passes through a threshold point. Accordingly, the slide guide 220 may be automatically moved to another side of the guide bar 213 by a restoring force.

Also, an end portion of the elastic member 230 connected with the cover plate 240 includes a plastic jointer 232, and an engagement hole 234 is formed in the cover plate 240 so that the plastic jointer 232 may be combined to perform a rotation.

The engagement hole 234 has an approximate peanut shape, and is formed to be slightly larger than the plastic jointer 232, or have a corresponding size as required. The engagement hole 234 includes an inserting portion 235 for insertion of the plastic jointer 232, and an engaging portion 236 having a smaller size than the inserting portion 235 and being spatially connected with the inserting portion 235, wherein the plastic jointer 232 is inserted through the inserting portion 235 into the engagement hole 234 and is rotatably fixed to the engaging portion 236.

The plastic jointer 232 may be inserted via the inserting portion 235 having a relatively large size by the above-described structure, and the plastic jointer 232 is moved to the engaging portion 236 having relatively small size after the plastic jointer 232 is inserted. Accordingly, the plastic jointer 232 may be rotatably fixed to the engagement hole 234.

As described above, the plastic jointer 232 and the engagement hole 234 enable a process of combining the elastic member 230 to be performed more conveniently. Also, workability and productivity are improved, and misassembly of the elastic member 230 is prevented.

The plastic jointer 232 is injection molded with the elastic member 230 as one body, and is desirably formed of a lubricant material having great self-lubrication, and a superior anti-fatigue property such as polyoxymethylene, polyamide, polyamide imide, and the like.

Although the above-described and illustrated exemplary embodiment of the present invention describes an example to which a torsion spring is simply applied, as a device of providing elasticity so that sliding of the slide part 120 may be elastically performed, however, a modularized driving device may be applied instead of the torsion spring as required. The present invention is not limited by a structure and a method of the driving device.

Since the slide module 200 may include a motion prevention device for preventing the slide guide 220 from being moved a distance greater than a predetermined distance in a direction of being spaced apart from the housing 210, the motion prevention device prevents the slide part 120 from being moved a distance greater than a predetermined distance along the thickness direction of the body part 110 by a user's carelessness, an external shock, and the like.

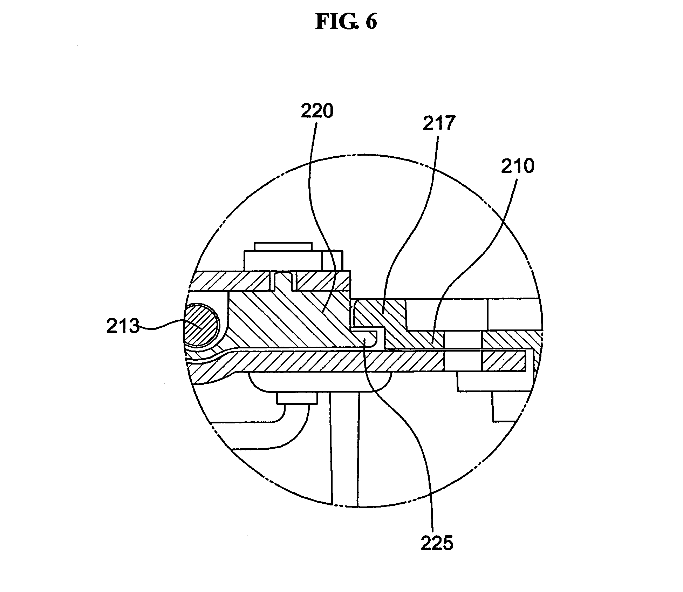

FIG. 6 is a cross-sectional view illustrating a section incised along a I-I line of FIG. 3. As an example, the motion prevention device includes a guide locking protrusion 225 formed on an outside surface of the slide guide 220, and a guide locking projection 217 which is formed on an inside surface of the setting hole 211 of the housing 210 to have a height difference from the guide locking protrusion 225 along a thickness direction of the housing 210, as illustrated in FIG. 6. A shape and a size of the guide locking projection 217 and the guide locking protrusion 225 may be changed as required, and the present invention is not limited thereto.

A guide pin may be protrudingly formed on a surface from among mutual contact surfaces of the housing 210 and the cover plate 240, and a guide hole may be formed so that the guide pin may be contained on another surface from among mutual contact surfaces of the housing 210 and the cover plate 240. Hereinafter, an example where the guide pin is formed on the cover plate 240, and the guide hole is formed on the housing 210 is described.

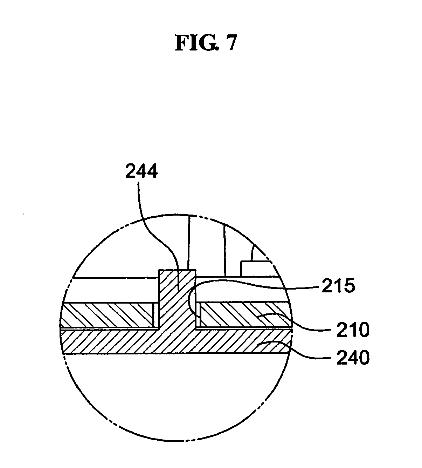

FIG. 7 is a cross-sectional view illustrating a section incised along a II-II line of FIG 3. As illustrated in FIG. 7, a guide pin 244 is protrudingly formed on a cover plate 240, and a guide hole 215 is formed on a housing 210 to contain the guide pin 244.

The guide pin 244 and the guide hole 215 perform a function of a reference point when the cover plate 240 is combined with the housing 210, and enable a worker to easily recognize an installation location of the cover plate 240 and combine the cover plate 240 with the housing 210. Also, the guide pin 244 and the guide hole 215 maintain a location of the cover plate 240 disposed on the housing 210 before the cover plate 240 is fastened by a fastening method such as screw fastening, and the like.

Also, a passage hole 242 having a predetermined size is formed being penetrative along a thickness direction in a center portion area of the cover plate 240. A flexible printed circuit board (FPCB) for electrically connecting the body part 110 with the slide part 120 may be passed via the passage hole 242.

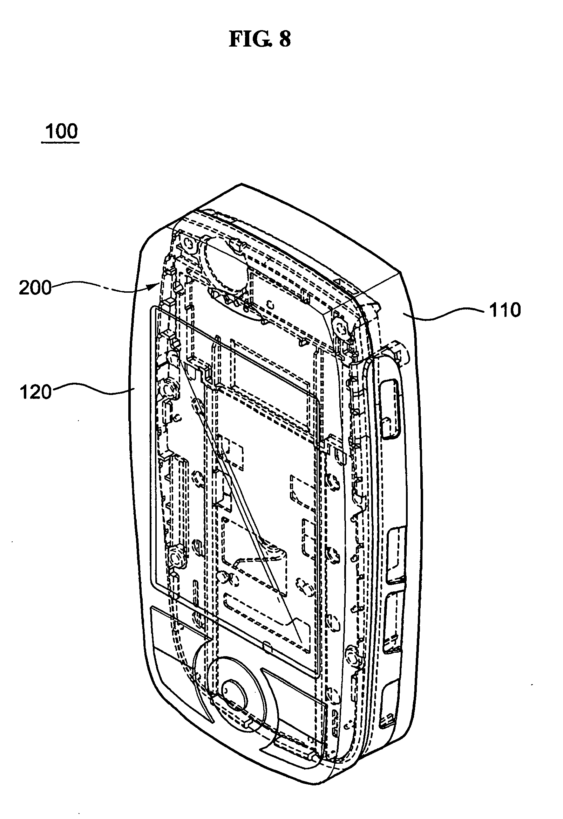

FIG. 8 is a perspective view illustrating a structure of a slide module in a slide type personal portable device according to another exemplary embodiment of the present invention.

As illustrated in FIG. 8, the personal portable device according to the present exemplary embodiment of the present invention includes a device body 100 and a slide module 200. The device body 100 includes a body part 110, and a slide part 120 disposed to be overlappable with the body part 110, and the slide module 200 is interposed between the body part 110 and the slide part 120 so that the slide part 120 may be slidable on the body part 110.

A keypad having a plurality of keys for inputting various information, and a transmitting portion for transmitting a user's voice may be included on a front surface of a lower side of a center in the body part 110, and a PCB for various controls may be contained in an inside of the body part 110.

A display portion for outputting image information, and a receiving portion for transmitting voice from a counterpart may be included on a front surface of the slide part 120.

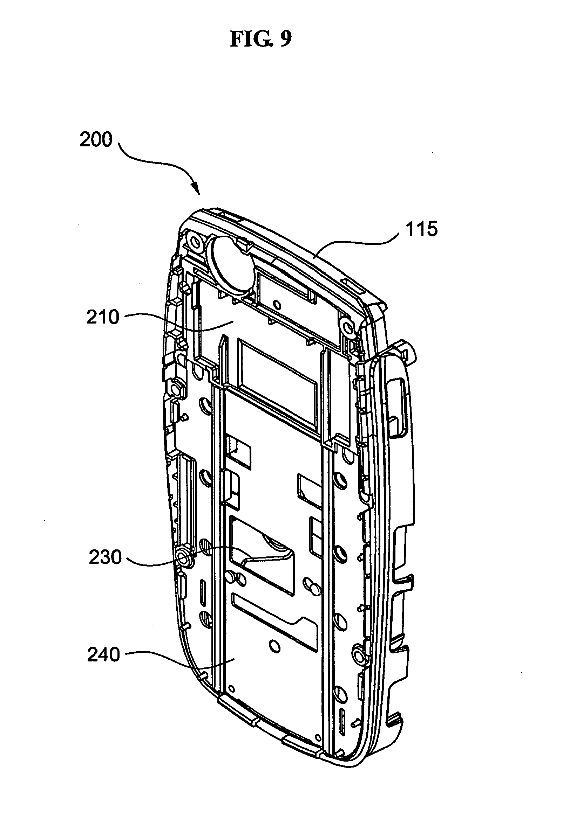

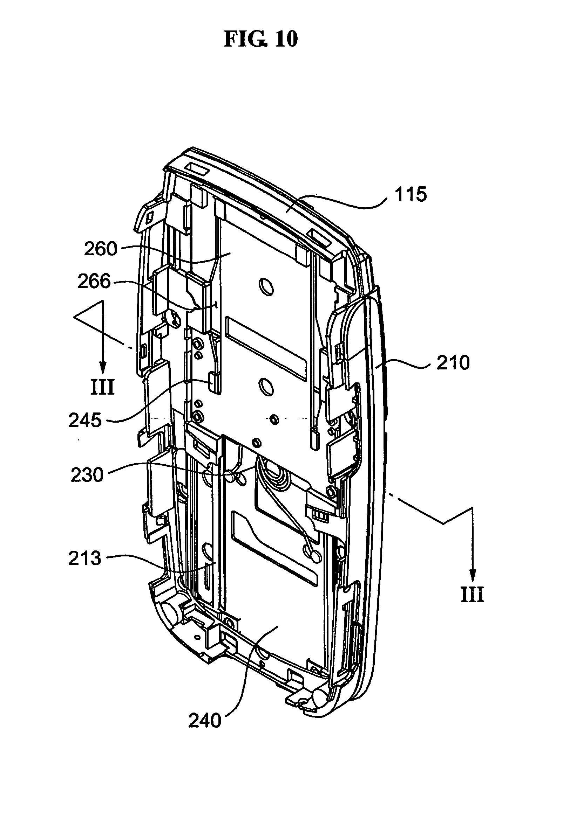

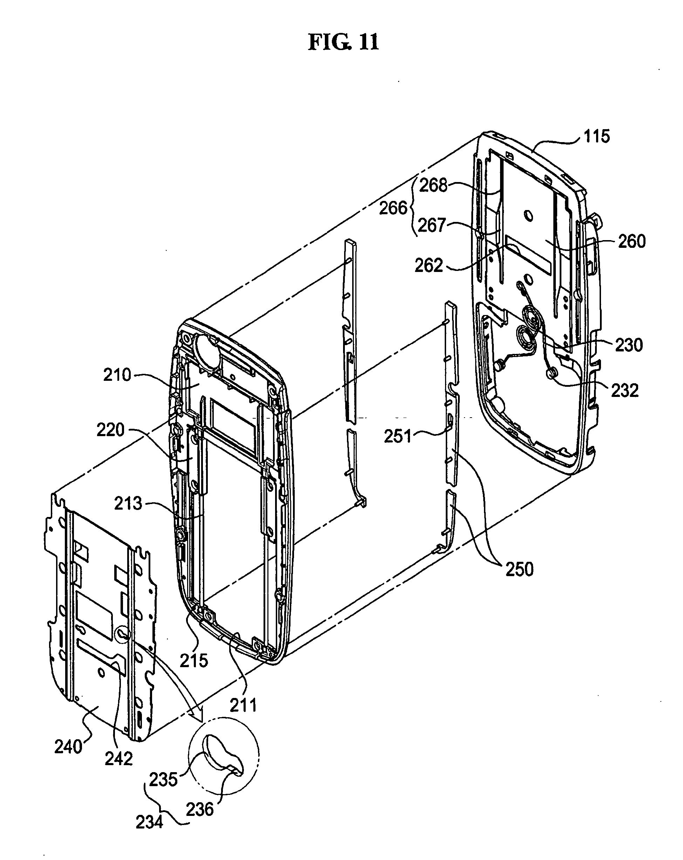

FIGS. 9 and 10 are perspective views illustrating a structure of a slide module in a slide type personal portable device according to another exemplary embodiment of the present invention, and FIG 11 is an exploded perspective view illustrating a structure of a slide module in a slide type personal portable device according to another exemplary embodiment of the present invention.

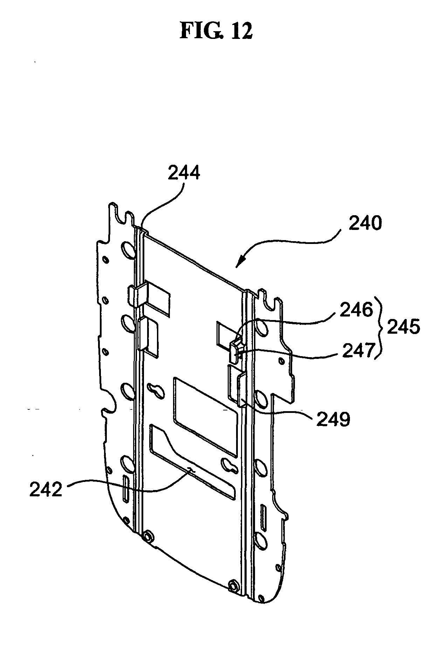

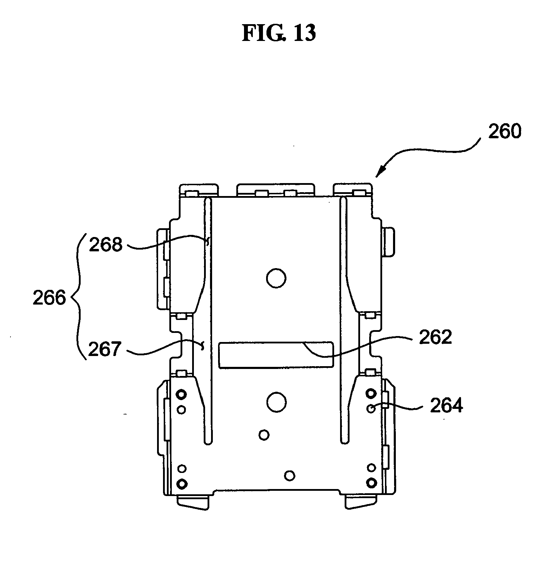

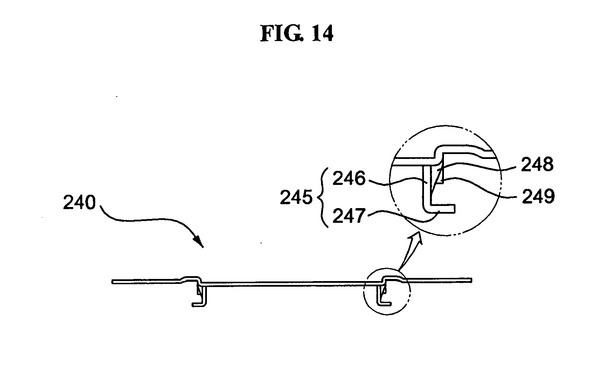

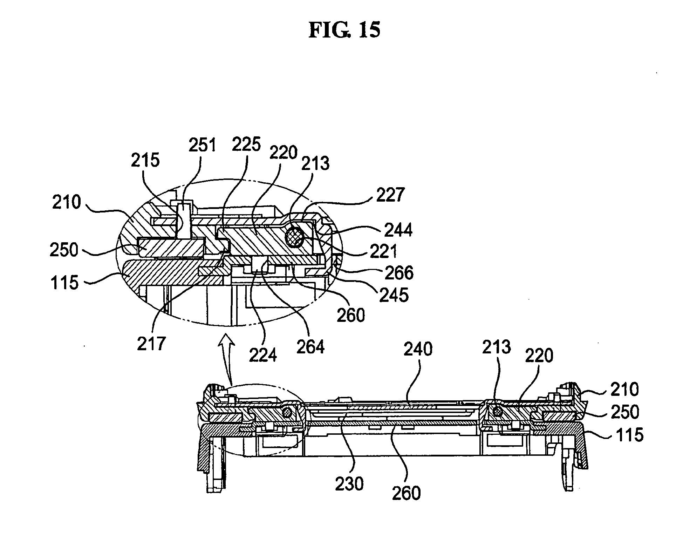

Also, FIG 12 is a perspective view illustrating a structure of a cover plate in a slide type personal portable device according to another exemplary embodiment of the present invention. FIGS. 13 and 14 are a top view and a side view illustrating a structure of a guide frame in a slide type personal portable device according to another exemplary embodiment of the present invention, and FIG 15 is a cross-sectional view illustrating a section incised along a III-III line of FIG 10.

As illustrated in FIGS. 9 through 15, the slide module 200 includes a body part 110 including a guide frame 260 which is provided in front of the body part 110 to form a front wall of the body part 110, a slide part 120 including a guide bar 213, and a slide guide 220 including a penetration hole 221 formed according to the guide bar 213 to guide a sliding of the slide part 120, the slide guide 220 being mounted on the slide part 120 via the guide bar 213, wherein the slide guide 220 is fixed to the guide frame 260 such that the slide part 120 is slidably mounted on the body part 110.

The guide bar 213 is protruded from a back surface of the slide part 120, or is formed in a structure of being contained in an inside of the slide part 120. The guide bar 213 may be configured to be combined in a doubly-overlapped form on a back surface of the slide part 120 by a separate rail plate, for example, the guide rail element of FIG 1. The above-described structure denotes a case where the back surface of the slide part 120 is formed by a double wall structure by the housing and the rail plate although the double wall structure is not separately shown.

Hereinafter, an example that the a setting hole 211 being connected with an inside is formed on a back surface of the housing 210 of the slide part 120, and the guide bar 213 is disposed along a sliding direction of the slide part 120 in an inside of the setting hole 211 is described.

The housing 210 forms an external appearance of the slide part 120. Also, the setting hole 211 being connected with the inside of the slide part 120 is formed on the back surface of the housing 210, and one pair of guide bars 213 is disposed along a sliding direction of the slide part 120 in an inside of the setting hole 211 to be spaced apart along a width direction of the slide part 120. The guide bar 213 is formed by insert injection molding with the housing 210 as one body, and is combined being separate from the housing 210 as required.

The slide guide 220 is combined with each guide bar 213 sliding along the sliding direction of the slide part 120. The slide guide 220 is fixed to the guide frame 260 fixed in the body part 110 as one body so that the slide part 120 is slidably mounted on the body part 110. Also, each slide guide 220 includes a penetration hole 221 formed according to the guide bar 213 to guide a sliding of the slide part 120.

The guide frame 260 forms a front wall of the body part 110, and is fixed in the body part 110 as one-body to cover a portion of a front surface of the housing 115 which forms an external appearance of the body part 110.

The guide frame 260 is formed of a general metal material in which screw fastening may be performed, and is formed of a material such as plastic having a relatively greater strength than the housing 115, a resin, and the like, as required. - The guide frame 260 is fixed on the housing 115 by insert injection molding with the housing 115 of the body part 110 as one body, and is configured so that the guide frame may form a front wall of the housing in a single wall form by methods excluding insert injection molding as required. For example, the guide frame may be fixed in the body part in a single wall form by a method such as welding, adhesion, and the like, and may be fixed in the body part as one body by other general fastening and adhesion methods, and the like.

The slide guide 220 may slide along the guide bar 213 by the above-described structure. Accordingly, the slide part 120 may slide along the body part 110,

Here, the slide guide 220 may be formed of a general plastic material, however, the slide guide 220 is desirably formed of a lubricant material having great self-lubrication, and superior anti-fatigue property such as polyoxymethylene, polyamide, polyamide imide, and the like, since a material having a great mechanical, thermal, and chemical property even in a wide usage temperature range for many hours, and great dimensional stability is required to be used.

Also, a cover plate 240 may be combined with an inside of the housing 210 to cover the setting hole 211. The cover plate 240 is combined with an inside of the housing 210 to cover the setting hole 211, and enables various parts in an inside of the slide part 120 to be protected from external interference and shock. Also, since the cover plate 240 can prevent a foreign substance, such as dust of the slide part 120, and the like from being flowed via the setting hole 211, performance reduction and breakdown due to inflow of the foreign substance, and the like, into the inside of the slide part 120 may be prevented.

Also, a guide slot 266 is formed in the guide frame 260 along the sliding direction of slide part 120 to stably prevent a gap between the body part 110 and the slide part 120 from being widened at a distance greater than a predetermined distance, and a joint hook 245 is formed in the cover plate 240 to be jointed with the guide slot 266 to perform sliding.

The guide slot 266 and the joint hook 245 slide along a sliding direction of the slide part 120, and are formed in various shapes and structures being selectively locked along a thickness direction. Also, the present invention is not limited to the shapes and structures.

Hereinafter, an example that the joint hook 245 having an approximate L-shape is formed in the cover plate 240, and the guide slot 266 is formed in the guide frame 260 so that the joint hook 245 may be contained being selectively locked along a thickness direction, and may slide is described.

Specifically, the joint hook 245 includes a perpendicular bending portion 246 bent from the cover plate 240, and a horizontal bending portion 247 bent from an end portion of the perpendicular bending portion 246. Also, the joint hook 245 is formed to form an approximate L-shape. The joint hook 245 may be formed by incising and bending a portion of the cover plate 240, and may be separately formed by adherence using a method such as combination, welding, and the like, as required.

The guide slot 266 includes an extension portion 267 which the horizontal bending portion 247 enters, and a guide portion 268 in which the horizontal bending portion 247 is locked and the perpendicular bending portion 246 is guided. The extension portion 267 is extendedly formed in a size which the horizontal bending portion 247 may enter. Here, the size is greater than or equal to a size of the horizontal bending portion 247. The guide portion 268 is smaller than the horizontal bending portion 247, and is formed being connected with two end portions of the extension portion 267 so that the perpendicular bending portion 246 may be guided in a state where the horizontal bending portion 247 does not become disconnected. The horizontal bending portion 247 of the joint hook 245 is desirably disposed in a slightly spaced state so that the horizontal bending portion 247 of the joint hook 245 may not be contacted with the guide frame 260 in a normal state where an external power is not applied.

As described above, since the body part 110 and the slide part 120 may be connected along a thickness direction via the joint hook 245 and the guide slot 266, the gap between the body part 110 and the slide part 120 by a user's carelessness, external shock, and the like, may be prevented from being spaced apart at a distance greater than a predetermined distance. Also, a fixed structure by the joint hook 245 and the guide slot 266 may be formed by a portion where a shape strength and an installation strength are relatively higher than a fixed structure by a guide locking protrusion 225 and a guide locking projection 217 described as follows, specifically, the cover plate 240 and the guide frame 260. Accordingly, the gap between the body part 110 and the slide part 120 may be uniformly and stably maintained.

Also, a support protrusion 248 which supports an inside surface of the slide guide 220, and prevents the slide guide 220 from being pushed or being moved to an inside along a width direction of the slide part 120 at a distance greater than a predetermined distance may be formed on an outside surface of the perpendicular bending portion 246. Also, a supporter 249 for supporting an inside surface of the slide guide 220 may be formed on the cover plate 240, and the supporter 249 may be formed by a same or similar method to the above-described joint hook 245.

The present exemplary embodiment of the present invention describes an example that both the support protrusion 248 and the supporter 249 are included, however, any one of the support protrusion 248 and the supporter 249 may be singly used as required.

Also, a depression portion 244 may be formed on the cover plate 240 to contain a protrusion portion 227 of the slide guide 220 to minimize a height by the slide guide 220 and the cover plate 240.

Specifically, the protrusion portion 227 is formed in the slide guide 220 where the guide bar 213 is passed so that a predetermined shape strength of a surrounding portion where the guide bar 213 is passed may be maintained. The depression portion 244 having a shape corresponding to the protrusion portion 227 may be formed on the cover plate 240, and the protrusion portion 227 may be contained by the depression portion 244. Accordingly, other portions excluding the depression portion 244 from among the cover plate 240 may be disposed being maximally closely adhered to the slide guide, and thickness increase due to including the cover plate 240 may be minimized. Additionally, the slide guide 220 may be stably supported by the protrusion portion 227 contained by the depression portion 244 without motion depending on a width direction.

An elastic member 230 may be included in the slide module 200 so that sliding of the slide part 120 may be elastically performed along the body part 110. A general spring, and the like, may be applied to the elastic member 230, and the present invention is not limited by a shape and a number of the spring.

One end of the elastic member 230 is connected with the cover plate 240, and another end is connected with the guide frame 222. Accordingly, elasticity is accumulated when the slide guide 220 is moved from an end portion area of the guide bar 213 to a center area of the guide bar 213, and the elastic member 230 is restored after the slide guide 220 passes through a threshold point. Accordingly, the slide guide 220 may be automatically moved to another side of the guide bar 213 by a restoring force.

Also, an end portion of the elastic member 230 connected with the cover plate 240 includes a plastic jointer 232, and an engagement hole 234 is formed in the cover plate 240 so that the plastic jointer 232 may be combined to perform a rotation.

The engagement hole 234 has an approximate peanut shape, and is formed to be slightly larger than the plastic jointer 232, or have a corresponding size as required. The engagement hole 234 includes an inserting portion 235 for insertion of the plastic jointer 232, and an engaging portion 236 having a smaller size than the inserting portion 235 and being spatially connected with the inserting portion 235, wherein the plastic jointer 232 is inserted through the inserting portion 235 into the engagement hole 234 and is rotatably fixed to the engaging portion 236. In this instance, the engaging portion 236 is desirably formed to have a circumferential surface larger than at least semicircle so as to prevent the plastic jointer 232 from being separated in a direction of the inserting portion 235.

The plastic jointer 232 may be inserted via the inserting portion 235 having a relatively large size by the above-described structure, and the plastic jointer 232 is moved to the engaging portion 236 having relatively small size after the plastic jointer 232 is inserted. Accordingly, the plastic jointer 232 may be rotatably fixed to the engagement hole 234.

As described above, the plastic jointer 232 and the engagement hole 234 enable a process of combining the elastic member 230 to be performed more conveniently. Also, workability and productivity are improved, and misassembly of the elastic member 230 is prevented.

The plastic jointer 232 is injection molded with the elastic member 230 as one body, and is desirably formed of a lubricant material having great self-lubrication, and a superior anti-fatigue property such as polyoxymethylene, polyamide, polyamide imide, and the like.

The guide locking protrusion 225 and the guide locking projection 217 for preventing the slide guide 220 from being moved a distance greater than a predetermined distance in a direction of being space apart from the body part 110 are formed in the slide module 200. Accordingly, it may be prevented that the slide part 120 is moved a distance greater than a predetermined distance along the thickness direction to the body part 110 by a user's carelessness, external shock, and the like.

Specifically, the guide locking protrusion 225 may be formed on an outside surface of the slide guide 220, and the guide locking projection 217 is formed on an inside surface of the setting hole 211 of the housing 210 so that the guide locking projection 217 may have a height difference from the guide locking protrusion 225, and may be disposed being overlappable with the guide locking protrusion 225. The guide locking protrusion 225 and the guide locking projection 217 are disposed being slightly spaced apart in a normal state, and may be locked with each other along the thickness direction when the slide part 120 is moved at a distance greater than a predetermined distance along the thickness direction to the body part 110 by a user's carelessness or external shock. A shape and a size of the guide locking protrusion 225 and the guide locking projection 217 may be changed depending on a required condition, a design model, and the like, as required, and the present invention is not limited by the shape and the size of the guide locking protrusion 225 and the guide locking projection 217.

Also, a slide damper 250 may be interposed between mutual contact surfaces of the slide part 120 and the body part 110 so that sliding of the slide part 120 on the body part 110 may be smoothly performed.

Specifically, the slide damper 250 is formed of a lubricant material having great self-lubrication, and a superior anti-fatigue property such as polyoxymethylene, polyamide, polyamide imide, and the like, and is interposed between mutual contact surfaces of the housing 210 of the slide part 120, and the body part 110. Accordingly, sliding of the slide part 120 on the body part 110 may be smoothly performed.

Hereinafter, an example that the slide damper 250 is combined on an outside surface of the housing 210 to be interposed between the housing 210 and the body part 110 is described. In this instance, an engagement protrusion 251 formed on a surface of the slide damper 250 is contained in an engagement groove 215 formed on the housing 210, and therefore, the slide damper 250 may be combined on the housing 210.

Also, a damper containing groove may be formed on the housing 210 to contain the slide damper 250. The present exemplary embodiment of the present invention describes an example that the damper containing groove is formed on the housing 210, however, the damper containing groove is formed on the body part 110, or the damper containing groove is respectively formed on two sides of mutual corresponding surfaces of the housing 210 and the body part 110 as required.

Also, the present exemplary embodiment of the present invention describes an example that the slide damper 250 is respectively disposed on two lateral portions of the housing 210, and is configured by a structure of being separated into two. However, a structure of one body, or a structure of being separated into at least three bodies may be configured as required, and a shape and a structure of the slide damper 250 may be variously changed depending on a required condition, a design model, and the like.

A guide protrusion 224 may be protrudingly formed on the slide guide 220, and a guide groove 264 may be formed on the guide frame 260 to contain the guide protrusion 224. The guide protrusion 224 and the guide groove 264 perform a function of a reference point when the slide guide 220 is combined with the guide frame 260, and enable a worker to easily recognize an installation location of the guide frame 260 with respect to the slide guide 220 and combine the slide guide 220 with the guide frame 260. Also, the guide protrusion 224 and the guide groove 264 preserve a location of the guide frame 260 and the slide guide 220 before the guide frame 260 and the slide guide 220 are fastened by a fastening method such as screw fastening, and the like.

Also, passage holes 242 and 262 respectively having a predetermined size are formed being penetrative along a thickness direction in a center portion area of the cover plate 240 and a center portion area of the guide frame 260. An FPCB for electrically connecting the body part 110 with the slide part 120 may be passed via the passage holes 242 and 262.

As described above, according to the present invention, there is provided a slide type personal portable device which enables a housing of a slide part formed of a single wall to perform an innate function of covering a surface of the slide part, and forming an external appearance, and to simultaneously perform a function of a slide module, thereby maintaining a predetermined shape strength and being thinly formed.

According to the present invention, there is provided a slide type personal portable device which enables a guide frame to perform a function of a slide module by being fixed in a body part as one body to form a front wall of the body part, and to simultaneously perform a function of a housing, thereby maintaining a predetermined shape strength and being thinly formed.

Accordingly, the present invention enables a personal portable device to be embodied in a small and thin form in accordance with a current slimming trend, and to satisfy consumers' rapidly-changing desires.

Also, the above-described structure can simplify a structure and an assembly process of a personal portable device, reduce costs, and improve workability and productivity.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims and their equivalents.

## Claims

1. A slide type personal portable device (100) comprising:
a body part (110) including a guide frame (260) which is provided In front of the body part (110) to form a front wall of the body part (110);
a slide part (120) including a housing (210) in which a setting hole (211) is formed on a back surface of the housing (210), wherein the setting hole (211) passes through the back surface, and a guide bar (213) is disposed along a sliding direction of the slide part (120) in an inside of the setting hole (211);
a cover plate (240) combined with an inside of the housing (210) to cover the setting hole (211); and
a slide guide (220) including a penetration hole (221) formed according to the guide bar (213) to guide a sliding of the slide part (120), wherein the slide guide (220) is mounted on the slide part (120) via the guide bar (213), and is fixed in the guide frame (260),
wherein a guide slot (266) is formed in the guide frame (260) along the sliding direction of slide part (120), and a joint hook (245) corresponding to the guide slot (266) is formed in the cover plate (240), and
the joint hook (245) passes through the guide frame (260) and is selectively jointed with the guide slot (266) to perform sliding.

2. The device of claim 1, wherein the guide frame (260) is formed by insert injection molding with the body part (110) as one body.

3. The device of claim 1, further comprising:
an elastic member (230) in which one end is connected with the cover plate (240), and another end is connected with the guide frame (260) so that sliding of the slide part is elastically performed.

4. The device of claim 3, wherein an end portion of the elastic member (230) connected with the cover plate (240) includes a plastic jointer (232), and an engagement hole (234) is formed in the cover plate (240) so that the plastic jointer (232) is combined to perform a rotation.

5. The device of claim 4, wherein the engagement hole (234) comprises:
an inserting portion (235) for insertion of the plastic jointer (232); and
an engaging portion (236) having a smaller size than the inserting portion (235) and being connected with the inserting portion (235);
wherein the plastic jointer (232) is inserted through the inserting portion (235) into the engagement hole (236) and is rotatably fixed to the engaging portion (236).

6. The device of claim 4, wherein the plastic jointer (232) is injection molded with the elastic member (230) as one body.

7. The device of claim 1, further comprising:
a guide pin (244) protrudingly formed on a surface from among mutual contact surfaces of the housing (210) and the cover plate (240); and
a guide hole (215) formed so that the guide pin (244) is contained on another surface from among mutual contact surfaces of the housing (210) and the cover plate (240).

8. The device of claim 1, wherein a passage hole (242) is formed in the cover plate (240) so that a flexible printed circuit board, FPCB, electrically connecting the body part (110) with the slide part (120), passes.

9. The device of claim 14, wherein the slide guide (220) is formed by a lubricant material.

10. The device of claim 1, wherein the joint hook (245) comprises:
a perpendicular bending portion (246) bent from the cover plate (240); and
a horizontal bending portion (247) bent from an end portion of the perpendicular bending portion (246).

11. The device of claim 10, further comprising:
a support protrusion (248) which is formed on an outside surface of the perpendicular bending portion (246), and supports an inside surface of the slide guide (220).

12. The device of claim 1, further comprising:
a supporter (249) which is bent from the cover plate (240) and supports the inside surface of the slide guide (220).

13. The device of claim 1, further comprising:
a guide locking protrusion (225) formed on an outside surface of the slide guide (220); and
a guide locking projection (217) which is formed on an inside surface of the setting hole (211), and is locked with the guide locking protrusion (225).

14. The device of claim 1, further comprising:
a slide damper (250) combined with any one of the slide part (120) and the body part (110) to be interposed between the slide part (120) and the body part (110).

## Patentansprüche

1. Persönliches tragbares Gerät (100) des Schiebetyps, umfassend:
einen Gehäuseteil (110) mit einem Führungsrahmen (260), der vor dem Gehäuseteil (110) vorgesehen ist, um eine Stirnwand des Gehäuseteils (110) zu bilden;
einen Schiebeteil (120) mit einem Gehäuse (210), in dem eine Einstellöffnung (211) auf einer Rückfläche des Gehäuses (210) ausgebildet ist, wobei die Einstellöffnung (211) durch die Rückfläche verläuft, und eine Führungsschiene (213) entlang einer Schieberichtung des Schiebeteils (120) in einer Innenseite der Einstellöffnung (211) angeordnet ist;
eine mit einer Innenseite des Gehäuses (210) kombinierte Abdeckplatte (240) zum Abdecken der Einstellöffnung (211); und
eine Schlittenführung (220) mit einer der Führungsschiene (213) entsprechend ausgebildeten Durchdringungsöffnung (221) zum Führen einer Verschiebung des Schiebeteils (120), wobei die Schlittenführung (220) über die Führungsschiene (213) auf dem Schiebeteil (120) montiert ist und in dem Führungsrahmen (260) befestigt ist,
wobei in dem Führungsrahmen (260) entlang der Schieberichtung des Schiebeteils (120) ein Führungsschlitz (266) ausgebildet ist, und in der Abdeckplatte (240) ein dem Führungsschlitz (266) entsprechender Gelenkhaken (245) ausgebildet ist; und
der Gelenkhaken (245) durch den Führungsrahmen (260) verläuft und selektiv mit dem Führungsschlitz (266) verbunden ist um eine Verschiebung auszuführen.

2. Gerät nach Anspruch 1, bei dem der Führungsrahmen (260) durch Einspritzgussverfahren mit dem Gehäuseteil (110) als ein Körper gebildet ist.

3. Gerät nach Anspruch 1, des Weiteren umfassend:
ein elastisches Element (230), bei dem ein Ende mit der Abdeckplatte (240) verbunden ist, und ein anderes Ende mit dem Führungsrahmen (260) verbunden ist, so dass eine Verschiebung des Schiebeteils elastisch durchgeführt wird.

4. Gerät nach Anspruch 3, bei dem ein Endabschnitt des mit der Abdeckplatte (240) verbundenen elastischen Elements (230) ein Kunststoffverbindungsteil (232) enthält und in der Abdeckplatte (240) eine Eingriffsöffnung (234) ausgebildet ist, so dass das Kunststoffverbindungsteil (232) zum Ausführen einer Drehung verbunden wird.

5. Gerät nach Anspruch 4, bei dem die Eingriffsöffnung (234) umfasst:
einen Einsetzabschnitt (235) zum Einsatz des Kunststoffverbindungsteils (232); und
einen Eingriffsabschnitt (236), der eine kleinere Größe als der Einsetzabschnitt (235) aufweist und der mit dem Einsetzabschnitt (235) verbunden ist;
wobei das Kunststoffverbindungsteil (232) durch den Einsetzabschnitt (235) in die Eingriffsöffnung (236) eingesetzt wird und drehbar an dem Eingriffsabschnitt (236) befestigt ist.

6. Gerät nach Anspruch 4, bei dem das Kunststoffverbindungsteil (232) mit dem elastischen Element (230) als ein Körper spritzgegossen ist.

7. Gerät nach Anspruch 1, des Weiteren umfassend:
einen Führungsstift (244), der hervorstehend auf einer Oberfläche aus wechselseitigen Kontaktflächen des Gehäuses (210) und der Abdeckplatte (240) heraus gebildet ist; und
eine Führungsöffnung (215), die so ausgebildet ist, dass der Führungsstift (244) auf einer anderen Fläche aus wechselseitigen Kontaktflächen des Gehäuses (210) und der Abdeckplatte (240) enthalten ist.

8. Gerät nach Anspruch 1, bei dem in der Abdeckplatte (240) ein Durchgangsloch (242) ausgebildet ist, so dass eine flexible Leiterplatte, FPCB, die den Gehäuseteil (110) mit dem Schiebeteil (120) elektrisch verbindet, hindurchgeht.

9. Gerät nach Anspruch 4, bei dem die Schlittenführung (220) durch einen Gleitmittelstoff gebildet wird.

10. Gerät nach Anspruch 1, bei dem der Gelenkhaken (245) umfasst:
einen senkrechten Biegeteil (246), der aus der Abdeckplatte (240) gebogen ist; und
einen waagerechten Biegeteil (247), der aus einem Endabschnitt des senkrechten Biegeteils (246) gebogen ist.

11. Gerät nach Anspruch 10, des Weiteren umfassend:
einen Auflagevorsprung (248), der auf einer äußeren Fläche des senkrechten Biegeteils (246) ausgebildet ist und eine innere Fläche der Schlittenführung (220) hält.

12. Gerät nach Anspruch 1, des Weiteren umfassend:
eine Stütze (249), die aus der Abdeckplatte (240) gebogen ist und die innere Fläche der Schlittenführung (220) hält.

13. Gerät nach Anspruch 1, des Weiteren umfassend:
einen Führungssperrvorsprung (225), der auf einer äußeren Fläche der Schlittenführung (220) ausgebildet ist; und
einen Führungssperrfortsatz (217), der auf einer inneren Fläche der Einstellöffnung (211) ausgebildet ist und mit dem Führungssperrvorsprung (225) arretiert wird.

14. Gerät nach Anspruch 1, des Weiteren umfassend:
einen Gleitungsdämpfer (250), der mit einem beliebigen des Schiebeteils (120) und des Gehäuseteils (110) verbunden ist, um zwischen den Schiebeteil (120) und den Gehäuseteil (110) gebracht zu werden.

## Revendications

1. Dispositif portable personnel de type coulissant (100) comprenant :
une partie formant corps (110) incluant un cadre guide (260) qui est prévu sur l'avant de la partie formant corps (110) pour former une paroi avant de la partie formant corps (110) ;
une partie coulissante (120) incluant un boîtier (210) dans lequel un trou de mise en place (211) est formé sur une surface arrière du boîtier (210), dans laquelle le trou de mise en place (211) passe à travers la surface arrière, et une barre de guidage (213) est disposée le long d'une direction de coulissement de la partie coulissante (120) à l'intérieur du trou de mise en place (211) ;
une plaque de couverture (240) combinée avec l'intérieur du boîtier (210) pour couvrir le trou de mise en place (211) ; et
un guide de coulissement (220) incluant un trou de pénétration (221) formé en accord avec la barre de guidage (213) pour guider un coulissement de la partie coulissante (120), dans lequel le guide de coulissement (220) est monté sur la partie coulissante (120) via la barre de guidage (213), et est fixé dans le cadre guide (260),
dans lequel une fente de guidage (266) est formée dans le cadre guide (260) le long de la direction de coulissement de la partie coulissant (120), et un crochet de jonction (245) correspondant à la fente de guidage (266) est formé dans la plaque de couverture (240), et
le crochet de jonction (245) passe à travers le cadre guide (260) et est sélectivement joint avec la fente de guidage (266) pour exécuter le coulissement.

2. Dispositif selon la revendication 1, dans lequel le cadre guide (260) est formé par moulage avec injection sur insert avec la partie formant corps (110) comme un corps unique.

3. Dispositif selon la revendication 1, comprenant en outre :
un élément élastique (230) dans lequel une extrémité est connectée avec la plaque de couverture (240) et une autre extrémité est connectée avec le cadre guide (260) de sorte que le coulissement de la partie coulissante est exécuté de manière élastique.

4. Dispositif selon la revendication 3, dans lequel une portion terminale de l'élément élastique (230) connectée avec la plaque de couverture (240) inclut un élément de jonction en matière plastique (232), et un trou d'engagement (234) est formé dans la plaque de couverture (240) de sorte que l'élément de jonction en matière plastique (232) est combiné pour exécuter une rotation.

5. Dispositif selon la revendication 4, dans lequel le trou d'engagement (234) comprend :
une portion d'insertion (235) pour insertion de l'élément de jonction en matière plastique (232) ; et
une portion d'engagement (236) ayant une taille plus petite que la portion d'insertion (235) et étant connectée avec la portion d'insertion (235) ;
dans lequel l'élément de jonction en matière plastique (232) est inséré à travers la portion d'insertion (235) jusque dans le trou l'engagement (236) et est fixé en rotation sur la portion d'engagement (236).

6. Dispositif selon la revendication 4, dans lequel l'élément de jonction en matière plastique (232) est moulé par injection avec l'élément élastique (230) comme un corps unique.

7. Dispositif selon la revendication 1, comprenant en outre :
une tige de guidage (244) formée de manière à se projeter sur une surface parmi des surfaces de contact mutuelles du boîtier (210) et de la plaque de couverture (240) ; et
un trou de guidage (215) formé de telle façon que la tige de guidage (244) est contenue sur une autre surface parmi les surfaces de contact mutuelles du boîtier (210) et de la plaque de couverture (240).

8. Dispositif selon la revendication 1, dans lequel un trou de passage (242) est formé dans la plaque de couverture (240) qui permet le passage d'une carte à circuits imprimés flexible, FPCB, qui connecte électriquement la partie formant corps (110) avec la partie coulissante (120).

9. Dispositif selon la revendication 14, dans lequel le guide de coulissement (220) est formé par un matériau lubrifiant.

10. Dispositif selon la revendication 1, dans lequel le crochet de jonction (245) comprend :
une portion cintrée perpendiculaire (246) cintrée depuis la plaque de couverture (240) ; et
une portion cintrée horizontale (247) cintrée depuis une portion terminale de la portion cintrée perpendiculaire (246).

11. Dispositif selon la revendication 10, comprenant en outre :
une projection de support (248) qui est formée sur une surface extérieure de la portion cintrée perpendiculaire (246) et qui supporte une surface intérieure du guide de coulissement (220).

12. Dispositif selon la revendication 1, comprenant en outre :
un élément de support (249) qui est cintré depuis la plaque de couverture (240) et qui supporte la surface intérieure du guide de coulissement (220).

13. Dispositif selon la revendication 1, comprenant en outre :
une projection de blocage de guidage (225) formée sur une surface extérieure du guide de coulissement (220) ; et
une saillie de blocage de guidage (217) qui est formée sur une surface intérieure du trou de mise en place (211) et qui est bloquée avec la projection de blocage de guidage (225).

14. Dispositif selon la revendication 1, comprenant en outre :
un amortisseur de coulissement (250) combiné avec l'une quelconque de la partie coulissante (120) et la partie formant corps (110) pour être interposé entre la partie coulissante (120) et la partie formant corps (110).
